# FASCICULE DE BREVET EUROPEEN

(11) **EP 1 277 212 B1**
(45) Date de publication et mention de la délivrance du brevet: **24.05.2006**
(21) Numéro de dépôt: 01921432.9
(22) Date de dépôt: 27.03.2001
(51) Int. Cl.: G21C 17/06

(54) **PROCEDE ET DISPOSITIF DE MESURE DU DIAMETRE D'UN CRAYON PERIPHERIQUE D'UN ASSEMBLAGE DE COMBUSTIBLE D'UN REACTEUR NUCLEAIRE**
VERFAHREN UND VORRICHTUNG ZUM MESSEN DES DURCHMESSERS EINES RANDBRENNSTABS ALS TEIL EINES KERNREAKTORBRENNSTABBÜNDELS
METHOD AND DEVICE FOR MEASURING THE DIAMETER OF A PERIPHERAL PENCIL OF A NUCLEAR REACTOR FUEL ASSEMBLY

(30) Priorité: 27.04.2000 FR 0005408
(43) Date de publication de la demande: 22.01.2003
(73) Titulaire: Framatome ANP, 92080 Paris La Defense (FR)
(72) Inventeur: ARIAS, Jairo, F-69740 Genas (FR); MAIRE, Sandrine, F-69300 Caluire (FR)
(74) Mandataire: Bouget, Lucien
(86) Numéro de dépôt international: PCT/FR2001/000934
(87) Numéro de publication internationale: WO 2001/082307

(56) Documents cités:
- EP-A- 0 392 832
- DE-A- 3 521 268
- FR-A- 2 721 704
- US-H- H1 262

## Description

L'invention concerne un procédé et un dispositif de mesure du diamètre d'un crayon périphérique d'un assemblage de combustible d'un réacteur nucléaire refroidi par de l'eau légère et en particulier d'un assemblage de combustible pour un réacteur nucléaire refroidi par de l'eau sous pression.

Les assemblages de combustible pour les réacteurs refroidis par de l'eau légère et en particulier les assemblages de combustible pour les réacteurs nucléaires refroidis par de l'eau sous pression comportent généralement un faisceau de crayons combustibles constitués chacun par un empilement de pastilles de matériau combustible à l'intérieur d'une enveloppe tubulaire et une ossature de maintien des crayons combustibles comprenant des grilles-entretoises réparties suivant une direction longitudinale du faisceau de crayons, des tubes-guides disposés dans certaines positions de crayon à l'intérieur du faisceau et deux embouts d'extrémité.

A l'intérieur du faisceau, les crayons de combustible sont maintenus dans des dispositions parallèles par les grilles-entretoises qui comportent un réseau à mailles carrées de cellules de forme carrée, dans chacune desquelles est engagé un crayon de combustible ou éventuellement un tube-guide, pour certaines positions à l'intérieur du réseau.

Les grilles-entretoises et les embouts d'extrémité qui sont fixés sur des extrémités des tubes-guides de part et d'autre du faisceau de crayons, présentent une forme carrée, de telle sorte que le faisceau et l'assemblage de combustible dans son ensemble présentent une forme prismatique droite à section carrée, c'est-à-dire une forme de parallélépipède.

Les crayons de combustible du faisceau disposés suivant les faces externes de l'assemblage de combustible qui sont perpendiculaires deux à deux constituent les crayons périphériques de l'assemblage de combustible, qui sont accessibles sur chacune des quatre faces latérales de l'assemblage de combustible et du faisceau de crayons.

A l'intérieur des cellules des grilles-entretoises, les crayons de combustible sont maintenus par des ressorts, en appui sur des butées rigides, ce qui permet d'obtenir à la fois le maintien des crayons dans des plans transversaux suivant un réseau régulier et dans la direction longitudinale axiale du faisceau.

Dans le réacteur nucléaire en service, les assemblages de combustible sont soumis à une irradiation qui est responsable de certaines modifications de structure et de dimension des éléments de l'assemblage de combustible.

En particulier, les pastilles de matériau combustible des crayons sont susceptibles de subir un certain gonflement pendant le fonctionnement du réacteur nucléaire.

II en résulte une déformation des gaines tubulaires des crayons et une augmentation du diamètre des crayons.

II peut être important, pour connaître le comportement du combustible dans le réacteur nucléaire et pour prévoir des opérations de maintenance des assemblages de combustible, de mesurer le diamètre des crayons, au moins dans certaines zones des crayons, après une certaine durée d'utilisation de l'assemblage de combustible dans le coeur du réacteur nucléaire.

Il est avantageux de pouvoir réaliser ces mesures sans démonter l'assemblage de combustible, mais, dans ce cas, les mesures de diamètre sont limitées aux crayons périphériques de l'assemblage de combustible accessibles sur les faces latérales de l'assemblage.

En outre, pendant le fonctionnement du réacteur nucléaire, de l'eau de refroidissement du réacteur circule à grande vitesse au contact des crayons maintenus dans l'ossature par l'intermédiaire des ressorts et bossettes des cellules des grilles-entretoises.

De ce fait, les crayons sont mis en vibration et subissent une certaine usure au contact des bossettes, à l'intérieur des grilles-entretoises.

II est nécessaire de pouvoir mesurer l'usure des tronçons des crayons à l'intérieur des grilles-entretoises, après un certain temps d'utilisation de l'assemblage de combustible dans le réacteur nucléaire.

Il est souhaitable de pouvoir réaliser ces mesures sans avoir à démonter l'assemblage de combustible.

Les assemblages de combustible qui sont déchargés du réacteur nucléaire, après arrêt et refroidissement du réacteur, sont généralement déposés dans une piscine de désactivation située dans un bâtiment du combustible, à proximité du bâtiment renfermant le réacteur nucléaire.

Les assemblages de combustible sont déplacés à l'intérieur de la piscine du combustible en utilisant un outil de manutention et de levage fixé à un pont passerelle se déplaçant au-dessus de la piscine du combustible. De plus, un descenseur, fixé contre une paroi de la piscine, permet de déplacer les assemblages de combustible dans la direction verticale.

Le déchargement des assemblages de combustible qui est effectué après refroidissement du réacteur nucléaire met en oeuvre une machine de chargement qui se déplace au-dessus d'une piscine du réacteur dans laquelle débouche la cuve du réacteur nucléaire renfermant les assemblages de combustible, la cuve et la piscine étant remplies d'eau pendant la manutention des assemblages de combustible.

Les mesures effectuées sur les assemblages de combustible peuvent être réalisées, soit dans la piscine du combustible, soit dans la piscine du réacteur nucléaire, suivant le déroulement des opérations de chargement et de déchargement des assemblages de combustible.

On ne connaissait cependant pas jusqu'ici de procédé permettant de réaliser la mesure de diamètre des crayons périphériques de l'assemblage de combustible suivant des tronçons des crayons compris entre deux grilles-entretoises successives ou suivant des tronçons introduits dans les grilles-entretoises et subissant une usure dans le réacteur en service, sans démontage de l'assemblage de combustible et avec une très bonne précision de mesure.

Le but de l'invention est donc de proposer un procédé de mesure du diamètre d'un crayon périphérique d'un assemblage de combustible d'un réacteur nucléaire refroidi par de l'eau légère comportant un faisceau de crayons combustibles et une ossature de maintien des crayons combustibles comprenant des grilles-entretoises réparties suivant une direction longitudinale axiale du faisceau de crayons, des tubes-guides disposés dans certaines positions de crayons à l'intérieur du faisceau et des embouts d'extrémité, la mesure étant effectuée sous eau, dans une piscine dans laquelle l'assemblage de combustible est placé avec son axe longitudinal dans la direction verticale, sur un tronçon longitudinal d'un crayon situé à la périphérie de l'assemblage de combustible, entre deux grilles-entretoises successives, ce procédé permettant de réaliser des mesures de grande précision à distance et sans démontage de l'assemblage de combustible.

Dans ce but :
- on met en place, à un niveau situé entre les deux grilles-entretoises successives, un outil de mesure comportant deux doigts de mesure ayant une latitude de déplacement relatif dans une première direction horizontale, rappelés l'un vers l'autre par un moyen de rappel élastique et s'étendant dans une seconde direction horizontale perpendiculaire à la première direction horizontale,
- on déplace les doigts de mesure dans la seconde direction horizontale, en direction du crayon, de manière à mettre en contact avec deux zones du tronçon de crayon, suivant des génératrices opposées diamétralement, deux pièces de contact respectivement solidaires de l'un et de l'autre doigts de mesure,
- on déplace, dans la direction axiale verticale du crayon, le long du tronçon situé entre les deux grilles-entretoises, les deux doigts de mesure dont les pièces de contact sont en appui sur le crayon dans les deux zones suivant des génératrices diamétralement opposées, et
- on mesure la distance entre les pièces en contact des doigts de mesure dans la première direction horizontale, pendant le déplacement axial des doigts de mesure, avec un capteur électromagnétique .

Afin de bien faire comprendre l'invention, on va décrire à titre d'exemple en se référant aux figures jointes en annexe, un dispositif de mesure suivant l'invention et l'application du procédé de mesure suivant l'invention à la mesure du diamètre d'un tronçon longitudinal d'un crayon de combustible périphérique d'un assemblage de combustible pour réacteur nucléaire à eau sous pression, entre deux grilles-entretoises et pour la mesure de l'usure d'un crayon dans une zone de maintien à l'intérieur d'une grille-entretoise.
La figure 1 est une vue schématique en élévation d'un assemblage de combustible et d'un outil de mesure du diamètre de crayons périphériques de l'assemblage de combustible.
La figure 2 est une vue de dessus suivant 2 de la figure 1, d'une partie de l'outil de mesure.
La figure 3 est une vue d'ensemble de l'installation de mesure permettant la mise en oeuvre du procédé de l'invention.
La figure 4 est une vue en élévation latérale schématique d'un tronçon de maintien d'un crayon dans une grille-entretoise, pendant une opération de contrôle d'usure en mettant en oeuvre le procédé de l'invention.
La figure 5 est une vue de dessus et en coupe transversale du crayon et du dispositif de mesure.

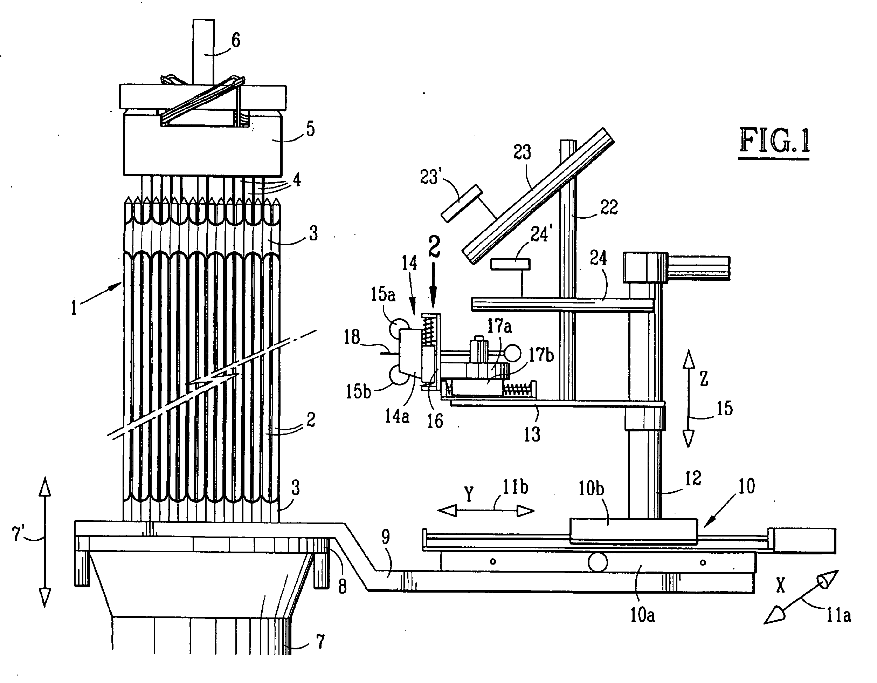

Sur la figure 1 on a représenté une partie d'un assemblage de combustible 1 d'un réacteur refroidi par de l'eau sous pression partiellement engagé dans un descenseur 7 de la piscine de désactivation de la centrale nucléaire.

L'assemblage de combustible 1 comporte un faisceau de crayons 2 et une ossature comportant des grilles-entretoises 3 de maintien des crayons 2, des tubes-guides 4 et des embouts fixés sur les parties d'extrémité des tubes-guides 4, de part et d'autre des extrémités du faisceau de crayons 2.

Sur la figure 1, on a représenté l'embout d'extrémité supérieur 5 de l'assemblage de combustible par l'intermédiaire duquel l'assemblage de combustible 1 est suspendu à une élingue 6 d'un dispositif de manutention reposant sur un pont passerelle au-dessus du niveau supérieur de la piscine.

L'assemblage de combustible qui est totalement immergé dans l'eau de la piscine est disposé avec son axe longitudinal parallèle à la direction des crayons de combustible 2 du faisceau, dans une direction verticale et introduit partiellement dans le descenseur 7 par l'extrémité supérieure du descenseur qui peut être déplacé dans la direction verticale, comme représenté schématiquement par la double flèche 7'.

Sur la partie d'extrémité supérieure du descenseur 2 comportant une ouverture de passage de l'assemblage de combustible est fixée une couronne adaptatrice 8 sur laquelle est monté un support 9 appelé support en S portant lui-même une table à mouvements croisés 10.

La table à mouvements croisés 10 comporte une table inférieure 10a montée mobile sur le support 9 dans une première direction horizontale X perpendiculaire au plan de la figure 1.

Une seconde table, ou table supérieure 10b, est montée mobile sur la table 10a dans une seconde direction horizontale Y perpendiculaire à la première direction horizontale X.

Les tables 10a et 10b à mouvements croisés sont motorisées et peuvent être déplacées dans un sens et dans l'autre suivant les directions X et Y comme représenté schématiquement par les doubles flèches 11a et 11 b.

Sur la table supérieure 10b à mouvements croisés est montée une colonne 12 sur laquelle est montée mobile, dans la direction verticale Z, un support horizontal 13 de l'outil de mesure 14.

Des moyens de déplacement motorisés sont associés à la colonne verticale 12 et au support 13, pour déplacer le support 13 dans la direction verticale à petite vitesse et de manière très précise, comme représenté de manière schématique par la double flèche 15.

L'outil de mesure 14 comporte un support 14a sur lequel sont montées rotatives autour d'axes horizontaux deux poulies de guidage 15a et 15b de l'outil 14 qui peuvent être escamotées.

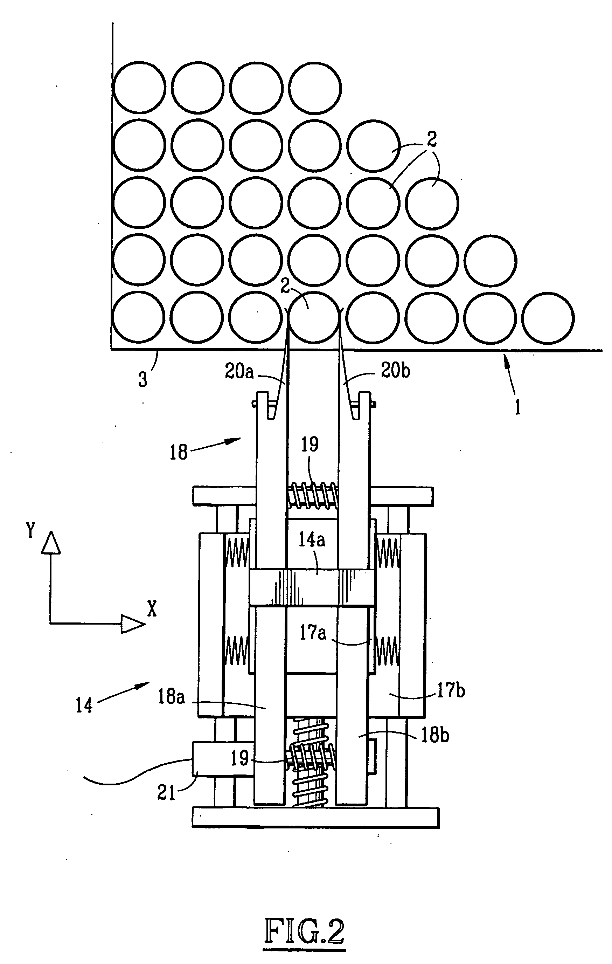

Le support 14a de l'outil est lui-même monté flottant dans la direction verticale Z, par l'intermédiaire d'éléments de guidage et de ressorts à l'intérieur d'un second support 16, lui-même monté flottant sur le support 13 de l'outil, par l'intermédiaire de deux tables flottantes 17a et 17b rappelées par des ressorts et présentant une latitude de déplacement, respectivement, dans la direction X et dans la direction Y, comme il est visible sur la figure 2.

De cette manière, on évite d'exercer des forces susceptibles d'entraîner une détérioration des éléments de l'assemblage de combustible 1, lors du déplacement de l'outil de mesure comportant en particulier les doigts de mesure 18a et 18b (figure 2) dans l'une quelconque des directions X, Y et Z.

Les doigts de mesure 18a et 18b de l'outil de mesure 14 sont montés sur le support 14a, avec une certaine latitude de déplacement dans la direction X, les doigts étant rappelés l'un vers l'autre dans la direction X, par des ressorts tels que 19.

Les doigts 18a et 18b s'étendent dans la direction Y et comportent, à leurs extrémités dirigées vers l'assemblage de combustible 1, des parties d'extrémité effilées 20a et 20b qui peuvent être engagées, de part et d'autre d'un crayon 2 de l'assemblage de combustible, dans deux interstices entre deux crayons périphériques successifs, dans la section transversale de l'assemblage de combustible 1, comme représenté sur la figure 2.

Les doigts de mesure 18a et 18b qui sont disposés parallèlement l'un à l'autre dans la direction Y avec une certaine latitude de déplacement dans la direction X sont associés, dans leurs parties d'extrémité opposées aux parties effilées 20a et 20b d'engagement dans la structure de l'assemblage de combustible 1, à un capteur de déplacement électromagnétique 21, de préférence de type LVDT. Un tel capteur LVDT comporte un corps de capteur dans lequel est monté un bobinage électrique sous la forme d'un solénoïde et une tige de capteur solidaire d'un noyau plongeur mobile à l'intérieur du solénoïde. Le bobinage est alimenté en courant électrique et l'induction produite par le bobinage est modifiée par le déplacement du noyau magnétique à l'intérieur du solénoïde, dans la direction de la tige du capteur. On peut ainsi mesurer des déplacements de manière très précise par mesure d'un courant. Le corps du capteur 21 est fixé sur l'un des doigts de mesure 18a et la tige du capteur solidaire du noyau magnétique est fixée sur le second doigt de mesure 18b, la tige du capteur étant disposée suivant la direction X de déplacement relatif des doigts de mesure. On peut ainsi mesurer de manière précise le déplacement des doigts, qui sont identiques, lors de leur engagement de part et d'autre d'un crayon 2 de l'assemblage de combustible dont on effectue la mesure de diamètre par l'intermédiaire de leurs parties d'extrémité d'engagement 20a et 20b effilées et recourbées.

On effectue une première mesure sur un crayon étalon, puis on mesure le déplacement des doigts lors de leur engagement sur le crayon 2 de l'assemblage de combustible sur lequel on effectue la mesure.

Le support 13 de l'outil comporte un mât 22 sur lequel sont montées une première caméra vidéo 23 inclinée, équipée d'un projecteur 23' et une seconde caméra vidéo 24 équipée d'un projecteur 24' orienté dans une direction horizontale.

Les images fournies par les caméras sont envoyées à un poste de mesure situé au-dessus du niveau de la piscine de désactivation de la centrale nucléaire.

La première caméra vidéo 23 permet de contrôler l'accostage des parties d'engagement des doigts de mesure de part et d'autre d'un crayon 2 sur lequel on effectue la mesure et la seconde caméra 24 à plus grand champ et munie d'un moyen de visée permet de repérer et de viser l'axe du crayon 2 de l'assemblage de combustible sur lequel on effectue les mesures, de manière à pouvoir placer et diriger la tête de mesure de l'outil de mesure 14.

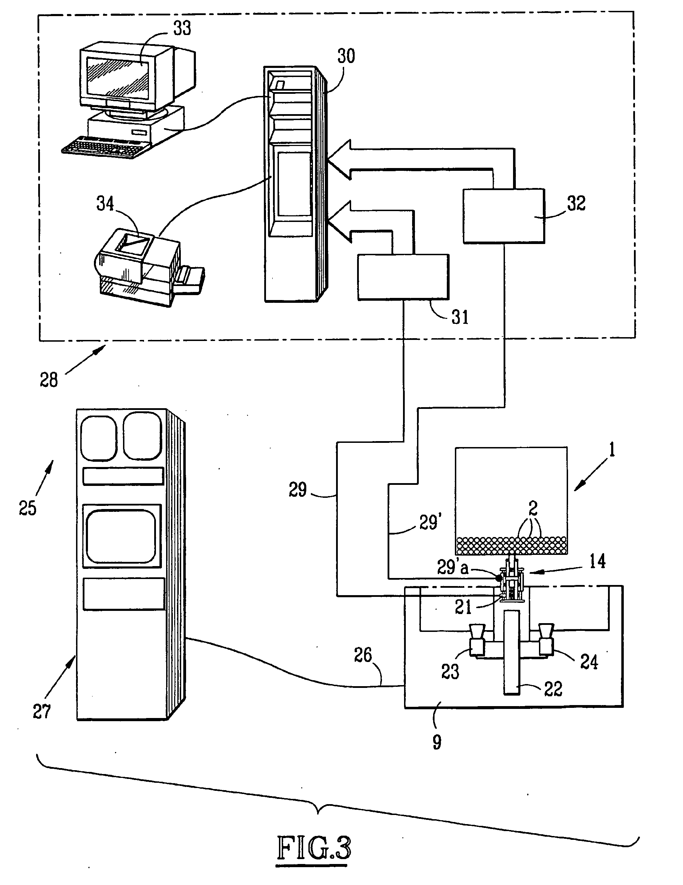

Sur la figure 3, on a représenté l'ensemble de l'installation de mesure de diamètre des crayons d'un assemblage de combustible 1, à l'intérieur de la piscine de désactivation d'une centrale nucléaire.

L'installation de mesure comporte en particulier le poste de mesure disposé au-dessus du niveau de la piscine et désigné de manière générale par le repère 25.

Le dispositif de mesure 14 qui a été décrit précédemment est fixé sur le support 9 solidaire d'une couronne adaptatrice fixée sur la partie supérieure d'un descenseur dans lequel est engagé partiellement l'assemblage de combustible 1. Le support 9 porte un ensemble de tables à mouvements croisés par l'intermédiaire duquel on réalise le déplacement de l'outil de mesure 14 suivant deux axes horizontaux X et Y, respectivement parallèle et perpendiculaire à une face frontale de l'assemblage de combustible 1 suivant laquelle on réalise une mesure de diamètre sur un crayon d'une rangée périphérique.

On effectue, depuis le poste de mesure 25 au-dessus du niveau de la piscine, les commandes de déplacement du descenseur dans la direction verticale, de déplacement de l'outil de mesure dans la direction verticale le long du mât de déplacement précis à vitesse faible 12 et les commandes des déplacements des tables de l'ensemble 10 à mouvements croisés dans les directions horizontales X et Y.

Pour cela, le support 9 du descenseur est relié par un câble 26 à une baie 27. Le câble 26 permet de transmettre à la baie 27 les signaux des caméras vidéo 23 et 24 et de visualiser l'assemblage de combustible dans la zone d'intervention de l'outil de mesure 14 ainsi que les doigts de mesure de l'outil 14. Le câble 26 permet également de transmettre les ordres de commande de déplacement de la baie 27 au support 9 du descenseur, à l'intérieur de la piscine de la centrale nucléaire.

La baie 27 est une baie de visualisation et de commande qui comporte des écrans de visualisation de l'assemblage de combustible 1 et des doigts de mesure de l'outil 14 ainsi que des moyens de commande du descenseur 7 et de la table à mouvements croisés 10 et des moyens de déplacement à vitesse lente de l'outil de mesure 14 associés au mât 12.

Le poste de mesure 25 comporte également une baie 28 de commande et d'acquisition des mesures qui est reliée par un câble 29 au capteur LVDT 21 et par un câble 29' à une sonde de température 29'a associée à l'outil de mesure 14.

La baie 28 comporte une unité 30 d'acquisition et de traitement de signaux analogiques comportant une carte d'entrée de données analogiques et un module de conversion analogique numérique.

Les entrées analogiques parvenant à l'unité 30 sont constituées par des signaux du capteur LVDT 21 de l'outil de mesure 14 transmis à l'unité 30 par l'intermédiaire d'un module de conditionnement 31 et les signaux analogiques provenant du détecteur de température 29'a plongé dans l'eau de la piscine de désactivation au voisinage de l'assemblage de combustible et relié à l'unité 30 par l'intermédiaire d'un boîtier 32 de conditionnement des signaux de la sonde de température.

Les signaux numérisés en sortie de l'unité 30 sont transmis à un calculateur 33 qui permet de calculer et d'afficher les valeurs mesurées du diamètre du crayon 2 de l'assemblage de combustible 1. Une correction des mesures est réalisée en fonction de la température mesurée par le détecteur de température.

Les signaux sont également transmis à une imprimante 34, pour éditer des valeurs de mesure et des valeurs calculées à partir des données.

On va maintenant décrire, en se référant à l'ensemble des figures 1 à 3, une opération de mesure de diamètre d'un crayon périphérique 2 de l'assemblage de combustible 1.

Préalablement à la mesure, on réalise un étalonnage de l'outil de mesure 14 en plaçant les parties de contact des doigts en appui sur deux zones diamétralement opposées d'un crayon étalon, par exemple au poste de mesure, au-dessus du niveau supérieur de la piscine. On mesure et on enregistre les signaux correspondants du capteur électromagnétique 21.

L'assemblage de combustible 1 sur lequel on réalise une mesure de diamètre d'un crayon périphérique 2 est suspendu, dans une disposition verticale, à l'élingue 6 d'un moyen de manutention porté par un pont passerelle de la piscine de désactivation du combustible.

L'assemblage de combustible est introduit dans la partie d'extrémité supérieure d'un descenseur 2 sur laquelle est fixé, par l'intermédiaire d'une couronne adaptatrice 8, le support 9 portant l'ensemble de tables à mouvements croisés 10 et l'outil de mesure 14 par l'intermédiaire du mât 12 et des moyens de déplacement précis de l'outil de mesure 14, dans la direction verticale Z.

L'assemblage de combustible est orienté de manière que sa face latérale sur laquelle se trouve le crayon périphérique 2 sur lequel on désire effectuer les mesures soit dirigée vers la tête de mesure 18 de l'outil de mesure 14 comportant les doigts de mesure 18a et 18b. La face de l'assemblage de combustible dirigée vers la tête de mesure 18 est parallèle à la direction horizontale X et perpendiculaire à la direction horizontale Y de déplacement de la table à mouvements croisés 10.

On déplace le descenseur 7 portant le support 9 dans la direction verticale vers le haut ou vers le bas, comme indiqué par la flèche 7', pour placer l'outil de mesure 14 entre deux grilles-entretoises 3 successives entre lesquelles on désire réaliser la mesure de diamètre d'un crayon combustible périphérique 2 de l'assemblage de combustible. La distance entre deux grilles-entretoises successives est de l'ordre de 150 mm.

On réalise un positionnement approximatif de la tête de mesure 14, de manière à pouvoir réaliser le balayage du tronçon de crayon par les doigts de mesure 18a et 18b de la tête de mesure 18 entre les deux grilles-entretoises 3, en utilisant les moyens de déplacement à vitesse lente associés au mât de déplacement 12, ces moyens permettant également un positionnement précis de la tête de mesure 18 suivant la direction verticale Z.

On utilise la caméra d'accostage 23 pour placer la tête de mesure 14 dans une disposition permettant de commencer les mesures suivant le tronçon de crayon de combustible 2 entre les grilles-entretoises 3.

Pour cela, on utilise l'ensemble de tables 10 à mouvements croisés pour centrer la tête de mesure 18 par rapport à l'axe du crayon combustible 2, par déplacement dans la direction X, puis pour engager les parties d'extrémité 20a et 20b des doigts de mesure 18a et 18b de la tête de mesure 18 de part et d'autre du crayon 2 par déplacement dans la direction Y.

Les parties d'extrémité effilées et recourbées 20a et 20b des doigts de mesure 18a et 18b comportent des pièces de contact dirigées l'une vers l'autre qui peuvent être constituées par une surface convexe interne des parties d'extrémité courbes 20a et 20b des doigts 18a et 18b.

Dans la position des doigts de mesure 18a et 18b permettant la mesure, comme représenté sur la figure 2, les surfaces de contact des doigts sont en appui sur deux zones de la surface externe du crayon 2 situées sur deux génératrices opposées diamétralement. Généralement, les surfaces des pièces de contact réalisant l'appui des doigts sur le crayon 2 sont placées dans des dispositions opposées diamétralement dans une section transversale circulaire du crayon.

On commande le déplacement du support 13 et de l'outil de mesure 14 dans la direction verticale Z, en utilisant les moyens de déplacement associés au mât 12 de déplacement dans la direction verticale.

On réalise un balayage du tronçon de crayon entre les grilles-entretoises 3, soit par déplacement vers le haut entre la grille inférieure et la grille supérieure, soit par déplacement vers le bas entre la grille-entretoise supérieure et la grille-entretoise inférieure, à vitesse lente et, pendant le déplacement, on mesure en continu le diamètre du crayon. Pendant le déplacement dans la direction verticale, la tête de mesure 18 de l'outil 14 est guidée par les poulies 15a et 15b dont les gorges sont en prise avec le crayon 2.

On affiche les résultats sur l'écran du micro-ordinateur 33 et/ou on imprime les résultats sur l'imprimante 34, sous la forme des valeurs du diamètre en fonction du temps ou en fonction de la position des points de mesure dans la direction verticale.

La position verticale des points peut être repérée, par exemple par rapport à la surface inférieure de l'embout supérieur 5 de l'assemblage de combustible.

Après avoir effectué la mesure sur un crayon périphérique 2, on peut réaliser la mesure sur un crayon voisin ou sur tout autre crayon périphérique situé sur la face de l'assemblage de combustible dirigée vers la tête de mesure. Après recul de la tête de mesure dans la direction Y, on réalise son déplacement dans la direction X, avec l'amplitude voulue pour passer d'un crayon périphérique au crayon suivant sur lequel on réalise la mesure.

Pour réaliser des mesures sur une autre face de l'assemblage de combustible 1 ou des mesures de diamètre de crayons périphériques sur un autre assemblage de combustible, on lève l'assemblage de combustible 1 en utilisant le moyen de manutention porté par le pont passerelle et on fait tourner l'assemblage de combustible autour de son axe pour diriger la face sur laquelle on réalise les mesures vers l'outil de mesure ou encore on prend en charge un nouvel assemblage de combustible qui est introduit partiellement à l'intérieur du descenseur 7.

Le procédé et le dispositif suivant l'invention peuvent être mis en oeuvre pour réaliser le contrôle d'usure d'un crayon de combustible 2, dans une zone de maintien du crayon située à l'intérieur d'une grille-entretoise 3.

Dans un premier temps, après mise en place de l'assemblage de combustible dans le descenseur ou avant la mise en place de l'assemblage de combustible en position de mesure, on réalise par traction dans la direction axiale, sur le crayon 2 de l'assemblage de combustible, un déplacement de sa zone d'usure à l'intérieur d'une cellule de la grille-entretoise 3, pour placer cette zone d'usure dans une position située au-dessus de la grille- entretroise 3.

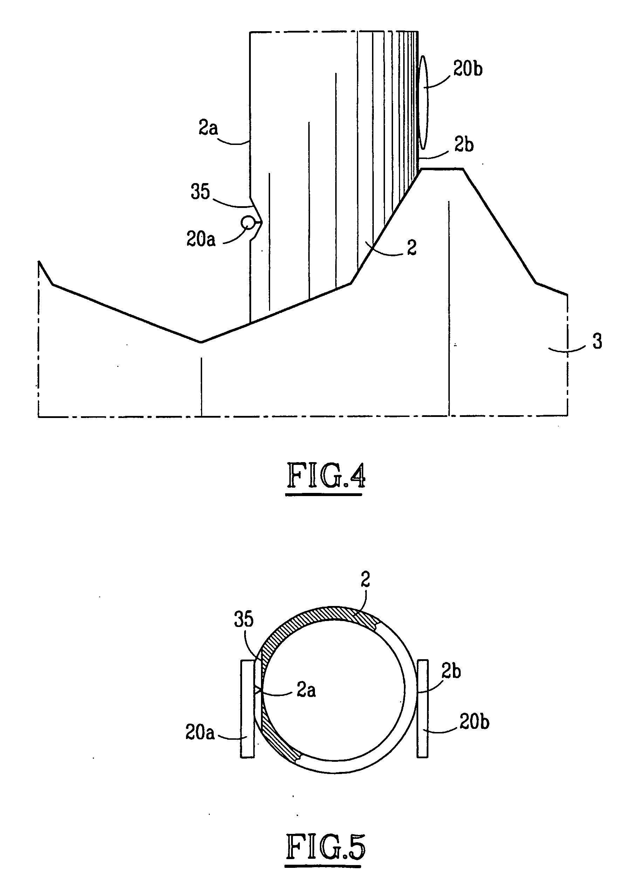

Sur la figure 4, on a représenté un crayon de combustible 2 comportant une zone d'usure 35 due au contact du crayon avec une bossette à l'intérieur d'une cellule de la grille-entretoise 3, représentée dans sa position après déplacement dans la direction axiale du crayon 2, de manière que la zone d'usure 35 se trouve sur un tronçon du crayon situé au-dessus de la grille-entretoise 3.

On met en oeuvre le procédé de mesure en utilisant des doigts de mesure ayant une disposition décalée permettant de réaliser la mesure dans une zone située à proximité immédiate du bord d'extrémité supérieure de la grille-entretoise 3. La ou les poulies de guidage peuvent être en position escamotée pour aller au plus près de la grille. En effet, il n'est pas possible de déplacer les crayons de combustible 2 d'un assemblage de combustible dans la direction verticale avec une grande amplitude, du fait que le jeu entre la partie supérieure des crayons et la surface inférieure de l'embout supérieur est réduit. D'autre part, comme il est visible sur la figure 4, la grille-entretoise 3 comporte des ailettes en saillie sur son bord supérieur.

De ce fait, les doigts de mesure de la tête de mesure 18 comportent des parties d'extrémité 20a et 20b constituées par des touches de contact avec le crayon de combustible d'une forme et d'une disposition particulières.

L'une des touches, 20a, ou touche de mesure, comporte une pointe permettant de réaliser un contact entre la touche du doigt de mesure et la surface extérieure du crayon de combustible 2, dans le fond de la zone d'usure 35.

La seconde touche de contact 20b, ou touche de référence, comporte une surface relativement importante et sans défaut pour assurer l'appui efficace de la tête de mesure sur le crayon, dans une zone décalée axialement par rapport à la zone de contact de la touche 20a.

Après extraction de la zone d'usure 35 du crayon de la grille-entretoise, on réalise, après étalonnage, la mise en place de la tête de mesure et son déplacement dans la direction verticale, de manière à balayer une génératrice 2a de la surface extérieure du crayon 2 suivant un tronçon comportant la zone d'usure 35, juste au-dessus de la partie supérieure de la grille-entretoise 3.

La touche 20b du second doigt de mesure 18b reste en contact avec une génératrice 2b du crayon 2 diamétralement opposée à la génératrice 2a suivant laquelle se déplace la pointe de la touche 20a du premier doigt de mesure 18a.

On peut ainsi mesurer de manière très précise le profil d'usure du crayon dans la zone du crayon extraite de la grille-entretoise.

On peut réaliser la mesure du profil d'usure en deux temps entre lesquels on inverse les positions de la touche de mesure et de la touche de référence suivant les génératrices opposées. On obtient ainsi deux profils d'usure du crayon.

Le procédé et le dispositif suivant l'invention permettent donc d'effectuer des examens dimensionnels très précis sur les crayons de combustible d'un assemblage de combustible irradié disposé dans la piscine de désactivation d'une centrale nucléaire.

Les informations fournies par les mesures peuvent être stockées et répertoriées dans la mémoire du micro-ordinateur.

Le procédé de mesure selon l'invention peut être totalement automatisé.

L'invention ne se limite pas strictement au mode de réalisation qui a été décrit.

C'est ainsi que l'outil de mesure peut présenter une forme différente de celle qui a été décrite et que les moyens de déplacement ou de rappel des différents éléments de l'outil de mesure peuvent également être réalisés sous une forme différente.

L'invention s'applique non seulement aux assemblages de combustible pour un réacteur nucléaire refroidi par de l'eau sous pression mais également à d'autres types d'assemblages de combustible comportant des crayons disposés suivant un faisceau accessible par les faces latérales de l'assemblage de combustible.

## Revendications

1. Procédé de mesure du diamètre d'un crayon périphérique (2) d'un assemblage de combustible (1) d'un réacteur nucléaire refroidi par de l'eau légère comportant un faisceau de crayons combustibles (2) et une ossature de maintien des crayons combustibles comportant des grilles-entretoises (3) réparties suivant une direction longitudinale axiale du faisceau de crayons (2), des tubes-guides (4) disposés dans certaines positions de crayons (2) à l'intérieur du faisceau et des embouts d'extrémité (5), la mesure étant effectuée sous eau dans une piscine dans laquelle l'assemblage de combustible (1) est placé avec son axe longitudinal dans la direction verticale, sur un tronçon longitudinal d'un crayon situé à la périphérie de l'assemblage de combustible (1), entre deux grille-entretoises successives (3), **caractérisé par le fait :**
- **qu'**on met en place à un niveau situé entre les deux grilles-entretoises successives (3), un outil de mesure (14) comportant deux doigts de mesure (18a, 18b) ayant une latitude de déplacement relatif dans une première direction horizontale (X), rappelés l'un vers l'autre par un moyen de rappel élastique (19) et s'étendant dans une seconde direction horizontale (Y) perpendiculaire à la première direction horizontale (X),
- **qu'**on déplace les doigts de mesure dans la seconde direction horizontale (Y), en direction du crayon (2), de manière à mettre en contact avec deux zones du tronçon de crayon (2), suivant des génératrices (2a, 2b) opposées diamétralement, deux pièces de contact (20a, 20b), respectivement solidaires de l'un et de l'autre doigts de mesure (18a, 18b),
- **qu'**on déplace, dans la direction axiale verticale du crayon (2), le long du tronçon situé entre les deux grilles-entretoises (3), les deux doigts de mesure (18a, 18b) dont les pièces de contact (20a, 20b) sont en appui sur le crayon dans les deux zones situées suivant les génératrices (2a, 2b) diamétralement opposées, et
- **qu'**on mesure la distance entre les pièces de contact (20a, 20b) des doigts de mesure (18a, 18b) dans la première direction horizontale (X), pendant le déplacement axial des doigts de mesure, avec un capteur électromagnétique (21).

2. Procédé suivant la revendication 1, **caractérisé par le fait qu'**on réalise, préalablement à la mise en place de l'outil de mesure (14), un étalonnage du capteur électromagnétique (21), en mettant en place les pièces de contact (20a, 20b) des doigts de mesure (18a, 18b) contre les génératrices diamétralement opposées d'un crayon étalon.

3. Procédé suivant l'une quelconque des revendications 1 et 2, **caractérisé par le fait qu'**on mesure la température dans la piscine au voisinage du tronçon du crayon combustible (2) sur lequel on effectue la mesure de diamètre et qu'on corrige les mesures d'écartement des pièces de contact (20a, 20b) du dispositif de mesure (14) en fonction de la mesure de température.

4. Procédé de mesure du diamètre d'un crayon périphérique d'un assemblage de combustible (1) selon l'une quelconque des revendications 1 à 3, sur un tronçon du crayon de combustible périphérique (2) engagé pour le maintien du crayon dans une cellule d'une grille-entretoise (3) et comportant une zone d'usure (35) sur sa surface externe, **caractérisé par le fait :**
- **qu'**on réalise, préalablement, par traction sur le crayon de combustible (2), le déplacement axial du crayon (2) par rapport à la grille-entretoise (3), pour extraire le tronçon du crayon combustible comportant la zone d'usure (35) de la grille-entretoise (3), et
- **qu'**on met en oeuvre le procédé de mesure sur le tronçon du crayon comportant la zone d'usure (35) extrait de la grille-entretoise (3), en déplaçant les doigts de mesure (18a, 18b) dont les pièces de contact (20a, 20b) sont en contact avec des génératrices diamétralement opposées (2a, 2b) de la surface externe du crayon (2), dans la direction axiale, suivant la longueur du tronçon comportant la zone d'usure (35).

5. Dispositif de mesure du diamètre d'un crayon périphérique d'un assemblage de combustible (1) d'un réacteur nucléaire refroidi par de l'eau légère comportant un faisceau de crayons combustibles (2) et une ossature de maintien des crayons combustibles (2) comprenant des grilles-entretoises (3) réparties suivant une direction longitudinale axiale du faisceau de crayons (2), des tubes-guides (4) disposés dans certaines positions de crayons (2) à l'intérieur du faisceau et des embouts d'extrémité (5), la mesure étant effectuée sous eau dans une piscine dans laquelle l'assemblage de combustible (1) est placé avec son axe lorigitudinal dans la direction verticale, sur un tronçon longitudinal du crayon (2) situé à la périphérie de l'assemblage de combustible (1), entre deux grilles-entretoises successives (3), **caractérisé par le fait qu'**il comporte :
- un outil de mesure (14) comportant deux doigts de mesure (18a, 18b) monté sur un support d'outil (14a) avec une latitude de déplacement relative dans une première direction horizontale (X), rappelés l'un vers l'autre par un moyen de rappel élastique (19) et s'étendant dans une seconde direction horizontale (Y) perpendiculaire à la première direction horizontale (X),
- un capteur électromagnétique (21) de déplacement relié aux doigts de mesure (18a, 18b) par deux parties respectives mobiles entre elles,
- des moyens de déplacement de l'outil de mesure (14) dans les deux directions horizontales (X, Y) et dans une direction verticale (Z), et
- un poste de mesure comportant des moyens de recueil et d'exploitation (30, 31, 33, 34) des signaux de mesure du capteur électromagnétique (21).

6. Dispositif suivant la revendication 5, **caractérisé par le fait que** les moyens de déplacement de l'outil de mesure (14) dans la première et dans la seconde directions horizontale (X, Y) comportent un ensemble de tables à mouvements croisés (10).

7. Dispositif suivant l'une quelconque des revendications 5 et 6, **caractérisé par le fait que** les moyens de déplacement de l'outil de mesure (14) dans la direction verticale (Z) comportent un mât de guidage (12) et des moyens de déplacement à vitesse lente associés au mât de déplacement (12).

8. Dispositif suivant l'une quelconque des revendications 5, 6 et 7, **caractérisé par le fait que** le capteur électromagnétique (21) de mesure de la distance entre les pièces de contact (20a, 20b) des doigts de mesure (18a, 18b) est un capteur LVDT comportant un corps comprenant un bobinage électrique et un noyau plongeur solidaire d'une tige, le corps de capteur étant fixé sur un premier doigt de mesure (18a) et la tige du capteur sur un second doigt de mesure (18b).

9. Dispositif suivant l'une quelconque des revendications 5 à 8, **caractérisé par le fait que** le poste de mesure disposé au-dessus du niveau de la piscine comporte une unité (29) d'acquisition et de traitement de signaux analogiques du capteur électromagnétique (21) et un calculateur (33) d'exploitation des signaux.

10. Dispositif suivant l'une quelconque des revendication 5 à 9, **caractérisé par le fait qu'**il comporte de plus des moyens (23, 24, 27) de visualisation de l'assemblage de combustible (1) et du dispositif de mesure (14) à l'intérieur de la piscine et des moyens de commande (27) des déplacements de l'outil de mesure (14).

11. Dispositif suivant la revendication 10, **caractérisé par le fait que** les moyens de visualisation (23, 24) comportent des caméras vidéo de visualisation de l'assemblage de combustible et des doigts (18a, 18b) de l'outil de mesure (14) et de visée d'un crayon périphérique (2) de l'assemblage de combustible (1).

12. Dispositif suivant l'une quelconque des revendications 5 à 11, **caractérisé par le fait qu'**il comporte de plus une sonde de mesure 29'a de la température dans la piscine au voisinage de l'outil de mesure (14).

## Claims

1. A method for measuring the diameter of a peripheral rod (2) of a fuel assembly (1) of a nuclear reactor cooled by light water, said fuel assembly including a bundle of fuel rods (2) and a framework for supporting the fuel rods, said framework including spacer grids (3) distributed in an axial longitudinal direction of the bundle of rods (2), guide tubes (4) arranged in certain positions of the rods (2) inside the bundle, and end fittings (5), the measurement being carried out underwater in a pool in which the fuel assembly (1) is placed with its longitudinal axis in the vertical direction, along a longitudinal segment of a rod situated on the periphery of the fuel assembly (1), between two successive spacer grids (3), the method being **characterised in that**:
- a measuring tool (14) is positioned at a level situated between the two successive spacer grids (3), said tool including two measuring fingers (18a, 18b) having freedom of relative displacement in a first horizontal direction (X), said fingers being returned towards one another by an elastic return means (19) and extending in a second horizontal direction (Y) perpendicular to the first horizontal direction (X),
- the measuring fingers are displaced in the second horizontal direction (Y) in the direction of the rod (2) so as to bring two contact pieces (20a, 20b) into contact with two zones of the segment of rod (2) along diametrically opposed generatrices (2a, 2b), said contact pieces being integrally connected to a respective one of the measuring fingers (18a, 18b),
- the two measuring fingers (18a, 18b) having contact pieces (20a, 20b) resting on the rod in the two zones situated along the diametrically opposed generatrices (2a, 2b) are displaced in the vertical axial direction of the rod (2) along the segment situated between the two spacer grids (3), and
- the distance between the contact pieces (20a, 20b) of the measuring fingers (18a, 18b) is measured with an electromagnetic sensor in the first horizontal direction (X) during the axial displacement of the measuring fingers.

2. Method according to Claim 1, **characterised in that** prior to the positioning of the measuring tool (14) a calibration of the electromagnetic sensor (21) is performed by positioning the contact pieces (20a, 20b) of the measuring fingers (18a, 18b) against the diametrically opposed generatrices of a reference rod.

3. Method according to either one of Claims 1 and 2, **characterised in that** the temperature of the pool is measured in the vicinity of the segment of the fuel rod (2) on which the diameter measurement is carried out and **in that** the measurements of the spacing of the contact pieces (20a, 20b) of the measuring device (14) are corrected as a function of the temperature measurement.

4. A method for measuring the diameter of a peripheral rod of a fuel assembly (1) according to any one of Claims 1 to 3 along a segment of the peripheral fuel rod (2) that is engaged for the support of the rod in a cell of the spacer grid (3) and that includes a wear zone (35) on its external surface, **characterised in that**:
- the axial displacement of the rod (2) in relation to the spacer grid (3) is performed beforehand by traction on the fuel rod (2) in order to extract the segment of the fuel rod including the wear zone (35) from the spacer grid (3), and
- the measuring method is implemented on the segment of the rod including the wear zone (35) extracted from the spacer grid (3) by displacing the measuring fingers (18a, 18b) having contact pieces (20a, 20b) in contact with the diametrically opposed generatrices (2a, 2b) of the external surface of the rod (2) in the axial direction along the length of the segment including the wear zone (35).

5. A device for measuring the diameter of a peripheral rod of a fuel assembly (1) of a nuclear reactor cooled by light water, the assembly including a bundle of fuel rods (2) and a framework for supporting the fuel rods (2), said framework comprising spacer grids (3) distributed along an axial longitudinal direction of the bundle of rods (2), guide tubes (4) arranged in certain positions for rods (2) inside the bundle, and end fittings (5), the measurement being carried out underwater in a pool in which the fuel assembly (1) is placed with its longitudinal axis in the vertical direction along a longitudinal segment of the rod (2) situated on the periphery of the fuel assembly (1), between two successive spacer grids (3), **characterised in that** said device includes:
- a measuring tool (14) including two measuring fingers (18a, 18b) mounted on a tool support (14a) with freedom of relative displacement in a first horizontal direction (X), the fingers being returned towards one another by an elastic return means (19) and extending in a second horizontal direction (Y) perpendicular to the first horizontal direction (X),
- an electromagnetic displacement sensor (21) connected to the measuring fingers (18a, 18b) via two respective portions that are mobile relative to one another,
- means for displacing the measuring tool (14) in the two horizontal directions (X, Y) and in a vertical direction (Z), and
- a measuring position including means (30, 31, 33, 34) for receiving and utilising measurement signals from the electromagnetic sensor (21).

6. Device according to Claim 5, **characterised in that** the means for displacing the measuring tool (14) in the first and second horizontal directions (X, Y) include a set of cross-motion tables (10).

7. Device according to either one of Claims 5 and 6, **characterised in that** the means for displacing the measuring tool (14) in the vertical direction (Z) include a guide post (12) and means for displacement at slow speed which are linked to the displacement post (12).

8. Device according to any one of Claims 5, 6 and 7, **characterised in that** the electromagnetic sensor (21) for measuring the distance between the contact pieces (20a, 20b) of the measuring fingers (18a, 18b) is an LVDT sensor including a body comprising an electrical coil and a solenoid plunger integrally connected to a rod, the body of the sensor being fixed to a first measuring finger (18a), and the rod of the sensor being fixed to a second measuring finger (18b).

9. Device according to any one of Claims 5 to 8, **characterised in that** the measuring position arranged above the level of the pool includes a unit (29) for acquiring and processing analogue signals from the electromagnetic sensor (21) and a computer (33) for utilising the signals.

10. Device according to any one of Claims 5 to 9, **characterised in that** it further includes means (23, 24, 27) for imaging the fuel assembly (1) and the measuring device (14) within the pool and means (27) for controlling the displacements of the measuring tool (14).

11. Device according to Claim 10, **characterised in that** the imaging means (23, 24) include video cameras for imaging the fuel assembly and the fingers (18a, 18b) of the measuring tool (14) and for sighting a peripheral rod (2) of the fuel assembly (1).

12. Device according to any one of Claims 5 to 11, **characterised in that** it further includes a probe (29'a) for measuring the temperature in the pool in the vicinity of the measuring tool (14).

## Patentansprüche

1. Verfahren zum Messen des Durchmessers eines Randbrennstabs (2) eines Brennelements (1) eines leichtwassergekühlten Kernreaktors, das ein Bündel Brennstäbe (2) und ein Haltegestell der Brennstäbe umfasst, das in einer axialen Längsrichtung des Brennstabbündels verteilte Abstandsgitter (3), in bestimmten Brennstabpositionen im Innern des Bündels angeordnete Führungsrohre (4) und Endteile (5) umfasst, wobei die Messung unter Wasser in einem Becken stattfindet, in dem sich das Brennelement (1) mit vertikal ausgerichteter Längsachse befindet, und in einem longitudinalen Abschnitt eines am Rand des Brennelements (1) befindlichen Brennstabs vorgenommen wird, zwischen zwei aufeinanderfolgenden Abstandsgittern (3),
**dadurch gekennzeichnet**:
- man positioniert in einer Höhe zwischen den beiden aufeinanderfolgenden Abstandsgittem (3) ein Messwerkzeug (14), das zwei Messfinger (18a, 18b) mit einer relativen Verschiebungsfreiheit in einer ersten horizontalen Richtung (X) umfasst, die sich gegenseitig rückstellen mittels einer elastischen Rückstelleinrichtung (19) und sich in einer zweiten horizontalen Richtung (Y) erstrecken, senkrecht zu der ersten horizontalen Richtung (X),
- man verschiebt die Messfinger in der zweiten horizontalen Richtung (Y) in Richtung Brennstab (2), um zwei Kontaktteile (20a, 20b), jeweils aus einem Stück mit dem einen und dem anderen Messfinger (18a, 18b), mit zwei diametral entgegengesetzten Mantellinien (2a, 2b) entsprechenden Zonen des genannten Abschnitts des Brennstabs (2) in Kontakt zu bringen,
- man verschiebt - in der vertikalen axialen Richtung des Brennstabs (2), an dem zwischen den beiden Abstandsgittern (3) befindlichen Abschnitt entlang -, die beiden Messfinger (18a, 18b), deren Kontaktteile (20a, 20b) sich in den beiden den diametral entgegengesetzten Mantellinien (2a, 2b) entsprechenden Zonen auf den Brennstäben abstützen, und
- man misst während der Axialverschiebung der Messfinger (18a, 18b) den Abstand zwischen den Kontaktteilen (20a, 20b) der Messfinger in der ersten horizontalen Richtung (X) mit einem elektromagnetischen Messsensoren (21).

2. Verfahren nach Anspruch 1, **dadurch gekennzeichnet, dass** man vor der Positionierung des Messwerkzeugs (14) den elektromagnetischen Sensor (21) eicht, indem man mit den Kontaktteilen (20a, 20b) der Messfinger (18a, 18b) die diametral entgegengesetzten Mantellinien eines Eichstabs berührt.

3. Verfahren nach einem der Ansprüche 1 und 2, **dadurch gekennzeichnet, dass** man die Temperatur in dem Becken in der Nähe des Abschnitts des Brennstabs (2) misst, in dem man die Messung des Durchmessers vornimmt, und dass man die Abstandsmessungen der Kontaktteile (20a, 20b) der Messvorrichtung (14) in Abhängigkeit von der Temperaturmessung korrigiert.

4. Verfahren zum Messen des Durchmessers eines Randbrennstabs eines Brennelements (1) nach einem der Ansprüche 1 bis 3, durchgeführt in einem in einer Festhaltezelle eines Abstandsgitters (3) steckenden Abschnitt des Randbrennstabs (2), der auf seiner Außenoberfläche eine Verschleißzone (35) aufweist,
**dadurch gekennzeichnet:**
- **dass** man den Brennstab (2) vorher mittels Zugkraft axial verschiebt in Bezug auf das Abstandsgitter (3), um den Abschnitt des Brennstabs, der die Verschleißzone (35) umfasst, aus dem Abstandsgitter (3) herauszuziehen, und
- **dass** man das Messverfahren in dem Brennstababschnitt, der die aus dem Abstandsgitter (3) herausgezogene Verschleißzone (35) umfasst, anwendet, indem man die Messfinger (18a, 18b), deren Kontaktteile (20a, 20b) in Kontakt sind mit diametral entgegengesetzten Mantellinien (2a, 2b) der Außenoberfläche des Brennstabs (2), in axialer Richtung verschiebt, entsprechend der Länge des die Verschleißzone (35) umfassenden Abschnitts.

5. Vorrichtung zum Messen des Durchmessers eines Randbrennstabs (2) eines Brennelements (1) eines leichtwassergekühlten Kernreaktors, das ein Bündel Brennstäbe (2) und ein Haltegestell der Brennstäbe umfasst, das in einer axialen Längsrichtung des Brennstabbündels verteilte Abstandsgitter (3), in bestimmten Brennstabpositionen im Innern des Bündels angeordnete Führungsrohre (4) und Endteile (5) umfasst, wobei die Messung unter Wasser in einem Becken stattfindet, in dem sich das Brennelement (1) mit vertikal ausgerichteter Längsachse befindet, und in einem longitudinalen Abschnitt eines am Rand des Brennelements (1) befindlichen Brennstabs (2) vorgenommen wird, zwischen zwei aufeinanderfolgenden Abstandsgittem (3),
**dadurch gekennzeichnet, dass** sie umfasst:
- ein Messwerkzeug (14) mit zwei auf einen Werkzeugträger (14a) montierten Messfingern (18a, 18b) mit einer relativen Verschiebungsfreiheit in einer ersten horizontalen Richtung (X), die sich gegenseitig rückstellen mittels einer elastischen Rückstelleinrichtung (19) und sich in einer zu der ersten horizontalen Richtung (X) senkrechten zweiten horizontalen Richtung (Y) erstrecken,
- einen elektromagnetischen Verschiebungssensor (21), mit den Messfingem (18a, 18b) verbunden durch jeweils zwei untereinander mobile Teile,
- Verschiebungseinrichtungen des Messwerkzeugs (14) in den beiden horizontalen Richtungen (X, Y) und in einer vertikalen Richtung (Z), und
- eine Messstation mit Einrichtungen (30, 31, 33, 34) zum Sammeln und Verarbeiten der Messsignale des elektromagnetischen Sensors (21).

6. Vorrichtung nach Anspruch 5. **dadurch gekennzeichnet, dass** die Verschiebungseinrichtungen des Messwerkzeugs (14) in der ersten und der zweiten horizontalen Richtung (X, Y) ein Kreuztischsystem (10) umfassen.

7. Vorrichtung nach einem der Ansprüche 5 und 6, **dadurch gekennzeichnet, dass** die Verschiebungseinrichtungen des Messwerkzeugs (14) in der vertikalen Richtung (Z) einen Führungsmast (12) und mit dem Verschiebungsmast (12) verbundene Langsamverschiebungseinrichtungen umfassen.

8. Vorrichtung nach einem der Ansprüche 5, 6 und 7, **dadurch gekennzeichnet, dass** der elektromagnetische Sensor (21) zum Messen des Abstands zwischen den Kontaktteilen (20a, 20b) der Messfinger (18a, 18b) ein LVDT-Sensor ist, der ein Gehäuse umfasst, das eine elektrische Spule und einen mit einer Stange verbundenen Tauchanker enthält, wobei das Sensorgehäuse an einem ersten Messfinger (18a) befestigt ist und die Stange des Sensors an einem zweiten Messfinger (18b).

9. Vorrichtung nach einem der Ansprüche 5 bis 8, **dadurch gekennzeichnet, dass** die über dem Beckenniveau angeordnete Messstation eine Einheit (29) zur Erfassung und Verarbeitung der analogen Signale des elektromagnetischen Sensors (21) und einen Rechner (33) zur Auswertung der Signale umfasst.

10. Vorrichtung nach einem der Ansprüche 5 bis 9, **dadurch gekennzeichnet, dass** sie zudem Einrichtungen (23, 24, 27) zur Sichtbarmachung des Brennelements (1) und der Messvorrichtung (14) im Innern des Beckens umfassen sowie Steuereinrichtungen (27) zur Verschiebungen des Messwerkzeugs (14).

11. Vorrichtung nach Anspruch 10, **dadurch gekennzeichnet, dass** Sichteinrichtungen (23, 24) Videokameras zur Sichtbarmachung des Brennelements und der Finger (18a, 18b) des Messwerkzeugs (14) und zur Anvisierung eines Randbrennstabs (2) des Brennelements (1) umfassen.

12. Vorrichtung nach einem der Ansprüche 5 bis 11, **dadurch gekennzeichnet, dass** sie zudem eine Sonde 29'a zum Messen der Temperatur in dem Becken in der Nähe des Messwerkzeugs (14) umfassen.
